# EUROPEAN PATENT SPECIFICATION

(11) **EP 3 885 954 B1**
(45) Date of publication and mention of the grant of the patent: **06.12.2023**
(21) Application number: 20894282.1
(22) Date of filing: 16.10.2020
(51) Int. Cl.: G06F 21/57, G06F 21/32, G06F 21/60

(54) **SECURITY REINFORCEMENT ARCHITECTURE, ENCRYPTION AND DECRYPTION METHOD, CAR NETWORKING TERMINAL, AND VEHICLE**
SICHERHEITSVERSTÄRKUNGSARCHITEKTUR, VERSCHLÜSSELUNGS- UND ENTSCHLÜSSELUNGSVERFAHREN, FAHRZEUGNETZWERKENDGERÄT UND FAHRZEUG
ARCHITECTURE DE RENFORCEMENT DE SÉCURITÉ, PROCÉDÉ DE CHIFFREMENT ET DE DÉCHIFFREMENT, TERMINAL DE MISE EN RÉSEAU DE VOITURES, ET VÉHICULE

(30) Priority: 29.11.2019 CN 201911200678
(43) Date of publication of application: 29.09.2021
(73) Proprietor: Guangdong Xiaopeng Motors Technology Co., Ltd., Sino-Singapore Knowledge City, Huangpu District Guangzhou, Guangdong 510555 (CN)
(72) Inventor: LIN, Qiaojie, Guangzhou, Guangdong 510555 (CN)
(74) Representative: Ran, Handong
(86) International application number: PCT/CN2020/121574
(87) International publication number: WO 2021/103839

(56) References cited:
- EP-A1- 3 049 989
- CN-A- 106 161 365
- CN-A- 106 570 382
- CN-A- 107 483 393
- CN-A- 107 919 955
- CN-A- 110 235 140
- CN-A- 110 401 538
- CN-A- 110 929 266
- US-A1- 2016 253 519
- US-A1- 2017 076 597
- US-A1- 2018 212 770
- US-B1- 10 078 743

## Description

### Field of Invention

The present invention relates to the field of automotive technology, and particularly to a security reinforcement architecture, an encryption and decryption method, an Internet of Vehicles terminal, and a vehicle.

### Background

Telematic Box (TBox) is a gateway and network port for Internet of Vehicles, and various application scenarios of TBox have a high demand for network security. In related arts, the TBox provides related hardware trusted zone functionality to meet security requirements of encryption and decryption. The trusted zone provides rich operating systems with application function interfaces, such as encryption and decryption for a client application. A user program may encrypt or decrypt sensitive data by calling these application function interfaces of the client application. A trusted application of the trusted execution environment of the trusted zone generates and returns encrypted keyblock data to the rich operating system user, and stores the keyblock data in the file system. Even so, however, a third-party malicious program may find this keyblock data in the file system, and then decrypt the sensitive data by using the decryption function interface of the client application to obtain valuable data, bringing serious security risks. Patent document EP3049989 is relevant prior art, titled: "PROTECTION SCHEME FOR REMOTELY-STORED DATA".

### Summary of Invention

In view of above, embodiments of the present invention provide a security reinforcement architecture, an encryption and decryption method, an Internet of Vehicles terminal, and a vehicle.

The present invention provides a security reinforcement architecture applicable to an Internet of Vehicles terminal, which comprises an application program, biometric information, an enhanced client application static library, a client application, and a trusted zone;
the application program is operable to load the biometric information;
the enhanced client application static library is operable to verify the biometric information;
the enhanced client application static library is operable to request generation of a request from the client application if the biometric information passes the verification;
the client application is operable to transmit the request to a trusted application in a trusted execution environment, and the trusted application is operable to generate a keyblock in the trusted zone and return the keyblock to the enhanced client application static library; and
the enhanced client application static library is further operable to encrypt the keyblock to obtain an encrypted keyblock.

In some embodiments, the application program links the biometric information and the enhanced client application static library.

In some embodiments, the application program invokes the enhanced client application static library for initialization.

In some embodiments, the biometric information comprises fingerprint information, facial information, and/or iris information.

In some embodiments, the enhanced client application static library is further operable to refuse to provide an encryption service if the verification of the biometric information fails.

In some embodiments, the enhanced client application static library is further operable to, when the application program transmits a data plaintext encryption request, decrypt the encrypted keyblock and transmit the decrypted keyblock and data plaintext to the trusted application in the trusted execution environment; and the trusted application is operable to, in the trusted zone, decrypt the decrypted keyblock and encrypt the data plaintext to obtain data ciphertext, and return the data ciphertext to the application program.

In some embodiments, the enhanced client application static library is further operable to, when the application program transmits a data ciphertext decryption request, decrypt the encrypted keyblock and transmit the decrypted keyblock and data ciphertext to the trusted application in the trusted execution environment; and the trusted application, in the trusted zone, decrypts the decrypted keyblock and decrypts the data ciphertext to obtain data plaintext, and returns the data plaintext to the application program.

The present invention provides an encryption and decryption method for a security reinforcement architecture, which is applicable to an Internet of Vehicles terminal, wherein the security reinforcement architecture comprises an application program, biometric information, an enhanced client application static library, a client application, and a trusted zone, and the encryption and decryption method comprises:
the application program loads the biometric information;
the enhanced client application static library verifies the biometric information, and requests a generation of a request from the client application if the biometric information passes the verification;
the client application transmits the request to a trusted application in a trusted execution environment;
the trusted application generates a keyblock in the trusted zone and returns the keyblock to the enhanced client application static library; and
the enhanced client application static library encrypts the keyblock to obtain an encrypted keyblock.

In some embodiments, the encryption and decryption method comprises:
when the application program transmits a data plaintext encryption request, the enhanced client application static library decrypts the encrypted keyblock and transmits the decrypted keyblock and data plaintext to the trusted application in the trusted execution environment; and
the trusted application, in the trusted zone, decrypts the decrypted keyblock and encrypts the data plaintext to obtain data ciphertext, and returns the data ciphertext to the application program.

In some embodiments, the encryption and decryption method comprises:
when the application program transmits a data ciphertext decryption request, the enhanced client application static library decrypts the encrypted keyblock and transmits the decrypted keyblock and data ciphertext to the trusted application in the trusted execution environment; and
the trusted application, in the trusted zone, decrypts the decrypted keyblock and decrypts the data ciphertext to obtain data plaintext, and returns the data plaintext to the application program.

The present invention provides an Internet of Vehicles terminal that employs the security reinforcement architecture as described above.

The present invention provides a vehicle comprising the described Internet of Vehicles terminal.

The present invention provides a vehicle, comprising:
one or more processors, a memory device; and
one or more programs, wherein the one or more programs are stored in the memory device and executable by the one or more processors, and the programs comprises instructions for performing the encryption and decryption methods as described above.

The present invention provides a non-transitory computer-readable storage medium comprising computer-executable instructions which, when executed by a processor, cause the processor to carry out the encryption and decryption methods as described above.

In the security reinforcement architecture, the encryption and decryption method, the Internet of Vehicles terminal, the vehicle, and the computer-readable storage medium of the embodiments of the present invention, the verification of the biometric information by the enhanced client application static library effectively prevents third party malicious applications from invoking the encryption and decryption function library of the enhanced client application static library. Moreover, the enhanced client application static library provides a secondary encryption to the keyblock returned from the trusted zone, so that the encrypted keyblock, if found, cannot be used directly by the client application, thereby greatly reducing the risk of the sensitive data being decrypted.

### Brief Description of Drawings

The above and/or additional aspects and advantages of the present invention will become apparent and readily understood from the following description of the embodiments in connection with the accompanying drawings, in which:
FIG. 1 is a flow chart of an encryption and decryption method in accordance with some embodiments of the present invention;
FIG. 2 is a block diagram of a security reinforcement architecture in accordance with some embodiments of the present invention;
FIG. 3 is a sequence diagram of an encryption and decryption method in accordance with some embodiments of the present invention;
FIG. 4 is a flow chart of an encryption and decryption method in accordance with some embodiments of the present invention; and
FIG. 5 is a flow chart of an encryption and decryption method in accordance with some embodiments of the present invention.

### Detailed Description

The embodiments of the present invention are described in detail below, examples of which are illustrated herein are illustrated in the accompanying drawings, in which like or similar numerals denote like or similar elements or elements having like or similar functions throughout. The embodiments described below by reference to the drawings are exemplary and are intended to be illustrative of the present invention and are not to be construed as limiting the present invention.

Telematic Box (TBox) is a gateway and the only network exit port for mobile Internet of Vehicles, and various application scenarios of TBox therefore have a high demand for network security. For example, it is desirable to protect sensitive data such as accounts and passwords of networked access point names, accounts and passwords in the background, and certificates, which requires the use of a secure encryption and decryption function. In related arts, the processing platform of the TBox provides associated hardware trusted zone functions, such as, Random Number Generator (RNG), Advanced Encryption Standard (AES), or RSA encryption algorithm, to meet encryption and decryption security requirements.

Current TBox typically employs rich operating systems that provide rich resources, such as Linux systems, Android systems, etc. The trusted zone provides a rich operating system with application function interfaces for a client application, such as key generation, encryption and decryption. A user program may encrypt or decrypt sensitive data by calling these application function interfaces of the client application. A trusted application of the trusted execution environment of the trusted zone generates and returns encrypted keyblock data to the user, and stores the keyblock data in the file system. Even so, however, a third party malicious program may find this keyblock data in the file system, and then decrypt the sensitive data by using the decryption function interface of the client application to obtain valuable data, bringing serious security risks.

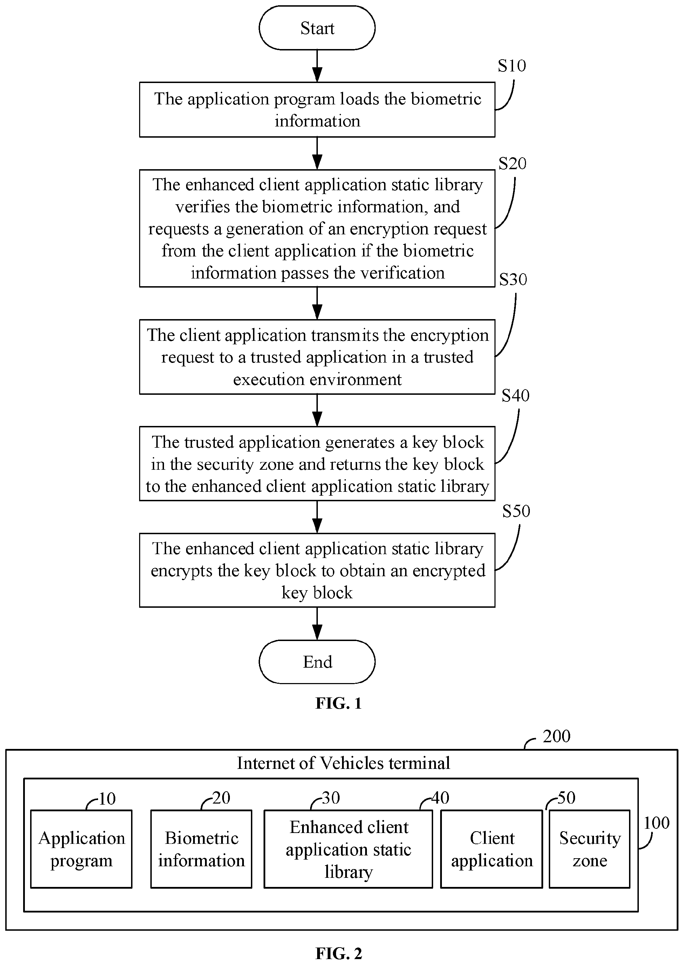

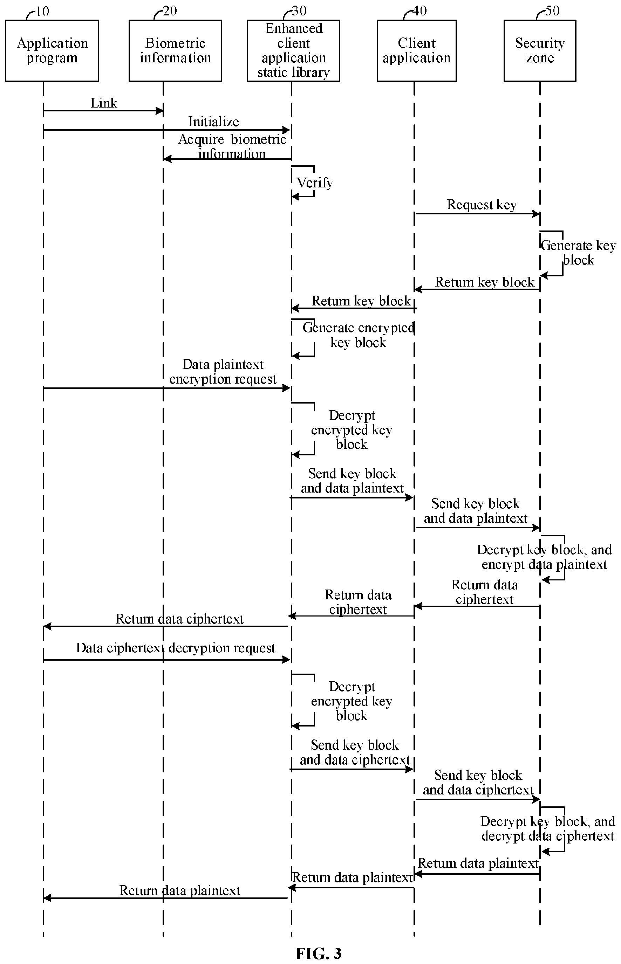

To solve the above problems, as shown in FIG. 1 and FIG. 3, an embodiment of the present invention provides an encryption and decryption method for a security reinforcement architecture, which is applicable to an Internet of Vehicles terminal. The security reinforcement architecture comprises an application program, biometric information, an enhanced client application static library, a client application, and a trusted zone. The encryption and decryption method comprises:
at S10, the application program loads the biometric information;
at S20, the enhanced client application static library verifies the biometric information, and (this action is not shown in fig. 3) requests a generation of a request from the client application if the biometric information passes the verification;
at S30, the client application transmits the request to a trusted application in a trusted execution environment;
at S40, the trusted application generates a keyblock in the trusted zone and returns the keyblock to the enhanced client application static library; and
at S50, the enhanced client application static library encrypts the keyblock to obtain an encrypted keyblock.

Referring to FIG. 2, an embodiment of the present invention further provides a security reinforcement architecture 100. The encryption and decryption method of embodiments of the present invention may be used in the security reinforcement architecture 100.

An embodiment of the present invention further provides an Internet of Vehicles terminal 200 and a vehicle. The vehicle employs the Internet of Vehicles terminal 200, and the operating system of the Internet of Vehicles terminal employs the security reinforcement architecture 100.

Specifically, the security reinforcement architecture 100 comprises an application program 10, biometric information 20, an enhanced client application static library 30, a client application 40, and a trusted zone 50. The application program 10 is operable to load the biometric information 20. The enhanced client application static library 30 is operable to verify the biometric information 20. The enhanced client application static library 30 is operable to request a generation of a request from the client application 40 when passing the verification of the biometric information. The client application 40 transmits the request to a trusted application in a trusted execution environment. The trusted application generates a keyblock in the trusted zone 50 and returns the keyblock to the enhanced client application static library 30. The enhanced client application static library 30 is further operable to encrypt the keyblock to obtain an encrypted keyblock.

In security reinforcement architecture 100, encryption and decryption method, Internet of Vehicles terminal 200, and the vehicle 300 of the embodiments of the present invention, the verification of the biometric information 20 by the enhanced client application static library 30 effectively prevents third party malicious applications from invoking the encryption and decryption function library of the enhanced client application static library 30. Moreover, the enhanced client application static library 30 provides a secondary encryption to the keyblock returned from the trusted zone 50, so that the encrypted keyblock, even if found, cannot be used directly by the client application 40, thereby greatly reducing the risk of the sensitive data being decrypted. Protecting the keyblock and providing an enhanced client application static library 30 that prevents third party malicious applications from illegally invoking the encryption and decryption to access the client application 40, thereby improving the security reliability of the overall system.

In this embodiment, step S10 further includes a step that:
the application program links the biometric information and the enhanced client application static library.

In this embodiment, the application program 10 links the biometric information 20 and the enhanced client application static library 30.

Specifically, the application program 10 links the biometric information 20 and the enhanced client application static library 30. In some example, the application program and biometric information are both in a Linux ELF file format. The biometric information may include, but not limited to, such as fingerprint information, facial information, and iris information. Taking the fingerprint information as an example, the fingerprint information may be a code segment named *fingerprint* linked into the ELF file of the application program. The fingerprint information may include hard coded values such as fingerprint version information, a check value of a cyclic redundancy check, a hash value, a key, and the like.

In this embodiment, step S10 further includes a step that:
the application program invokes the enhanced client application static library for initialization.

In this embodiment, the application program 10 invokes the enhanced client application static library 30 for initialization.

Specifically, the application program 10 may invoke an initialization function of the enhanced client application static library 30 for initialization. Initialization may be used to assign a default value to a variable, set a default state for an associated control, and prepare the enhanced client application static library 30 for access requests.

In this embodiment, step S20 includes that:
the enhanced client application static library acquires the biometric information.

In this embodiment, the enhanced client application static library 30 acquires the biometric information 20.

Specifically, the enhanced client application static library 30 acquires fingerprint data in the *fingerprint* and verifies the authenticity of the fingerprint data. Specifically, the verification includes two phases. In the first phase, the fingerprint version information is read first. An XOR operation is then performed between the fingerprint version information and a Magic number 1. The result of the XOR operation is subjected to a cyclic redundancy check, and the check result is compared to a check value of the cyclic redundancy check within the fingerprint information. If it succeeds, the verification proceeds to the next phase for authentication. In the second phase, key information is read from the fingerprint information. The key information is inverted and then subjected an XOR operation with a Magic number 2. A SHA256 hash operation is performed on the obtained result, and the result of the hash operation is then compared to a hash value within the fingerprint information. If it succeeds, the authentication of the fingerprint information is successful.

In this embodiment, in either of the two phases of checking the fingerprint information, authentication of the fingerprint is deemed to fail if the operation result is inconsistent with the corresponding value in the fingerprint information. The encryption and decryption service will be refused to be provided if the authentication of the fingerprint fails.

The enhanced client application static library 30, upon successful fingerprint authentication, requests the client application 40 to generate an AES key. The client application 40 forwards the request to a Trusted Application (TA) in the Trusted Execution Environment (TEE). The TA generates a keyblock in the trusted zone 50. The keyblock consists of an encrypted key, a non-repeating random number, and a length of an authorization note, and is stored in a memory device. The generated keyblock is returned to the enhanced client application static library 30, which re-encrypts the keyblock.

The enhanced client application static library 30 may utilize Key Derivation Function (KDF) to generate Key 1. Specifically, the enhanced client application static library 30 has a hard coded AES key 0, which is subjected to an XOR operation with a Magic number 3 to get a Key 0+. The negation of a salt value and the key 0+ is input to the KDF to derive the Key 1. AES encryption uses the derived Key 1 to encrypt the keyblock to obtain an encrypted keyblock. The encrypted keyblock is written into the file system for storage while the sensitive information, such as the keyblock, Key 0, Key 0+, and Key 1, in the memory are erased.

In this way, the verification of the biometric information 20 (e.g., a fingerprint) by the enhanced client application static library 30 effectively prevents third party malicious applications from invoking the encryption and decryption function library of the enhanced client application static library 30. Moreover, the enhanced client application static library 30 provides a secondary encryption to the keyblock returned from the trusted zone 50, so that the encrypted keyblock, even if found, cannot be used directly by the client application 40, thereby greatly reducing the risk of the sensitive data being decrypted.

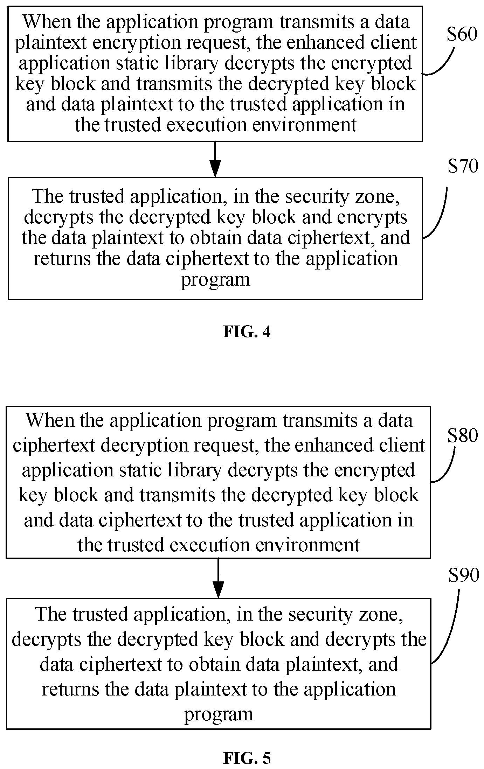

Referring to FIG. 3 and FIG. 4, in some embodiments, the encryption and decryption method comprises:
at S60, when the application program transmits a data plaintext encryption request, the enhanced client application static library decrypts the encrypted keyblock and transmits the decrypted keyblock and data plaintext to the trusted application in the trusted execution environment; and
at S70, the trusted application, in the trusted zone, decrypts the decrypted keyblock and encrypts the data plaintext to obtain data ciphertext, and returns the data ciphertext to the application program.

In some embodiments, when the application program 10 transmits a data plaintext encryption request, the enhanced client application static library 30 decrypts the encrypted keyblock and transmits the decrypted keyblock and data plaintext to the trusted application in the trusted execution environment. The trusted application, in the trusted zone 50, decrypts the decrypted keyblock and encrypts the data plaintext to obtain data ciphertext, and returns the data ciphertext to the application program 10.

Specifically, the application program 10 sends a data plaintext encryption request to an encryption function of the enhanced client application static library 30. The enhanced client application static library 30 calculates the Key 1 with the method described above, reads the encrypted keyblock from the file system, and decrypts the encrypted keyblock using the Advanced Encryption Standard algorithm to obtain the keyblock information. The client application 40 transmits the keyblock and data plaintext to the TA in the TEE. The TA decrypts the keyblock first, then encrypts the data plaintext to obtain data ciphertext, and then returns the data ciphertext to the application program 10 and erases the sensitive information in the memory device, such as the keyblock, Key 0, Key 0+, and Key 1.

Referring to FIG. 3 and FIG. 5, the encryption and decryption method comprises:
at S80, when the application program transmits a data ciphertext decryption request, the enhanced client application static library decrypts the encrypted keyblock and transmits the decrypted keyblock and data ciphertext to the trusted application in the trusted execution environment; and
at S90, the trusted application, in the trusted zone, decrypts the decrypted keyblock and decrypts the data ciphertext to obtain data plaintext, and returns the data plaintext to the application program.

In some embodiments, the enhanced client application static library 30 decrypts the encrypted keyblock when the application program 10 transmits a data ciphertext decryption request, and transmits the decrypted keyblock and data ciphertext to the trusted application in the trusted execution environment. The trusted application, in the trusted zone 50, decrypts the decrypted keyblock and decrypts the data ciphertext to obtain data plaintext, and returns the data plaintext to the application program.

Specifically, the application program 10 sends a decryption request to a decryption function of the enhanced client application static library 30. The enhanced client application static library 30 calculates the Key 1 with the method described above, reads the encrypted keyblock from the file system, and decrypts the encrypted keyblock using the Advanced Encryption Standard algorithm to obtain the keyblock information. The client application 40 transmits the keyblock and data ciphertext to the TA of the TEE. The TA decrypts the keyblock first, then decrypts the data ciphertext to obtain data plaintext, and then returns the data plaintext to the application program 10.

In this way, only after the biometric information 20 passes the verification by the enhanced client application static library 30, the data can be encrypted or decrypted in the trusted zone with the keyblock decrypted by the enhanced client application static library 30, thereby improving the security and reliability of the system.

An embodiment of the present invention further provides a computer-readable storage medium. Computer-executable instructions, when executed by one or more processors, cause the processors to carry out the encryption and decryption method of any of the above embodiments.

An embodiment of the present invention further provides a vehicle. The vehicle comprises one or more processors and a memory device having stored thereon one or more programs that are configured to be executed by the one or more processors. The programs include instructions for performing the encryption and decryption method of one of the above embodiments.

The processor may be operable to provide computing and controlling capabilities to support operation of the vehicular system of the vehicle. The memory device of the vehicle provides an environment for execution of the computer-readable instructions in the memory device.

The vehicular system of the vehicle employs the Internet of Vehicles terminal 200 described above, which employs the security reinforcement architecture described above. It can be appreciated that, the verification of the biometric information by the enhanced client application static library effectively prevents third party malicious applications from invoking the encryption and decryption function library of the enhanced client application static library. Moreover, the enhanced client application static library provides a secondary encryption to the keyblock returned from the trusted zone, so that the encrypted keyblock, even if found, cannot be used directly by the client application, thereby greatly reducing the risk of the sensitive data being decrypted.

It will be appreciated by one of ordinary skills in the art that all or part of the processes in the method embodiments described above may be accomplished by instructing relevant hardware through a computer program. The program may be stored in a non-transitory computer-readable storage medium. The program, when executed, may include a flow of an embodiment of the methods as described above. The storage medium may be a magnetic disk, an optical disk, a read-only memory (ROM), or the like.

The above embodiments merely illustrate several implementations of the present invention, which are described in greater detail but are not to be construed as limiting the protection scope of the present invention. It should be noted that many variations and modifications may be made by one of ordinary skills in the art without departing from the concepts of the present invention, which fall within the scope of the present invention. The scope of the invention should, therefore, be determined by the appended claims.

## Claims

1. A security reinforcement architecture (100), applicable to an Internet of Vehicles terminal (200), **characterized in that**:
the security reinforcement architecture (100) comprises an application program (10), biometric information (20), an enhanced client application static library (30), a client application (40), and a trusted zone (50);
the application program (10) is operable to load the biometric information (20);
the enhanced client application static library (30) is operable to verify the biometric information (20);
the enhanced client application static library (30) is operable to request generation of a request from the client application (40) if the biometric information (20) passes the verification;
the client application (40) is operable to transmit the request to a trusted application in a trusted execution environment, and the trusted application is operable to generate a keyblock in the trusted zone (50) and return the keyblock to the enhanced client application static library (30); and
the enhanced client application static library (30) is further operable to encrypt the keyblock to obtain an encrypted keyblock.

2. The security reinforcement architecture (100) of claim 1, wherein the application program (10) links the biometric information (20) and the enhanced client application static library (30).

3. The security reinforcement architecture (100) of claim 1, wherein the application program (10) invokes the enhanced client application static library (30) for initialization.

4. The security reinforcement architecture (100) of claim 1, wherein the biometric information (20) comprises fingerprint information, facial information, and/or iris information.

5. The security reinforcement architecture (100) of claim 4, wherein the fingerprint information includes one or more hard coded values selected from a group of fingerprint version information, a check value of a cyclic redundancy check, a hash value, and a key.

6. The security reinforcement architecture (100) of claim 1, wherein the enhanced client application static library (30) is further operable to refuse to provide an encryption service if the verification of the biometric information (20) fails.

7. The security reinforcement architecture of claim 1, wherein:
the enhanced client application static library (30) is further operable to, when the application program (10) transmits a data plaintext encryption request, decrypt the encrypted keyblock and transmit the decrypted keyblock and data plaintext to the trusted application in the trusted execution environment; and
the trusted application is operable to, in the trusted zone (50), decrypt the decrypted keyblock and encrypt the data plaintext to obtain data ciphertext, and return the data ciphertext to the application program (10).

8. The security reinforcement architecture of claim 1, wherein:
the enhanced client application static library (30) is further operable to, when the application program (10) transmits a data ciphertext decryption request, decrypt the encrypted keyblock and transmit the decrypted keyblock and data ciphertext to the trusted application in the trusted execution environment; and
the trusted application, in the trusted zone (50), decrypts the decrypted keyblock and decrypts the data ciphertext to obtain data plaintext, and returns the data plaintext to the application program (10).

9. An encryption and decryption method for a security reinforcement architecture (100), applicable to an Internet of Vehicles terminal (200), **characterized in that**:
the security reinforcement architecture (100) comprises an application program (10), biometric information (20), an enhanced client application static library (30), a client application (40), and a trusted zone (50),
wherein the encryption and decryption method comprises:
loading (S10) the biometric information (20) by the application program (10);
verifying (S20) the biometric information (20) by the enhanced client application static library (30) and, if the biometric information (20) passes the verification, requesting generation of a request from the client application (40) by the enhanced client application static library (30);
transmitting (S30) the request to a trusted application in a trusted execution environment by the client application (40);
generating (S40) a keyblock in the trusted zone (50) and returning the keyblock to the enhanced client application static library (30) by the trusted application; and
encrypting (S50) the keyblock by the enhanced client application static library (30) to obtain an encrypted keyblock.

10. The encryption and decryption method of claim 9, comprising:
when the application program (10) transmits a data plaintext encryption request, decrypting (S60) the encrypted keyblock and transmitting the decrypted keyblock and data plaintext to the trusted application in the trusted execution environment by the enhanced client application static library (30); and
decrypting (S70) the decrypted keyblock and encrypting the data plaintext to obtain data ciphertext in the trusted zone (50), and returning the data ciphertext to the application program (10) by the trusted application.

11. The encryption and decryption method of claim 9, comprising:
when the application program (10) transmits a data ciphertext decryption request, decrypting (S80) the encrypted keyblock and transmitting the decrypted keyblock and data ciphertext to the trusted application in the trusted execution environment the enhanced client application static library (30); and
decrypting (S90) the decrypted keyblock and decrypting the data ciphertext to obtain data plaintext in the trusted zone (50), and returning the data plaintext to the application program (10) by the trusted application.

12. An Internet of Vehicles terminal (200) employing the security reinforcement architecture (100) of any one of claims 1 to 8.

13. A vehicle comprising the Internet of Vehicles terminal (200) of claim 12.

14. A vehicle, comprising:
one or more processors, a memory device; and
one or more programs, wherein the one or more programs are stored in the memory device and executable by the one or more processors, and the programs comprises instructions for performing the encryption and decryption method of one of claims 9 to 11.

15. A non-transitory computer-readable storage medium comprising computer-executable instructions that, when executed by a processor, cause the processor to carry out the encryption and decryption method of one of claims 9 to 11.

## Patentansprüche

1. Sicherheitsverstärkungsarchitektur (100), anwendbar auf ein Internet-von Fahrzeugen-Endgerät (200), **dadurch gekennzeichnet, dass**:
die Sicherheitsverstärkungsarchitektur (100) ein Anwendungsprogramm (10), biometrische Informationen (20), eine erweiterte statische Client-Anwendungsbibliothek (30), eine Client-Anwendung (40) und eine vertrauenswürdige Zone (50) umfasst;
das Anwendungsprogramm (10) die Aufgabe hat, die biometrischen Informationen (20) zu laden;
die erweiterte statische Client-Anwendungsbibliothek (30) die Aufgabe hat, die biometrischen Informationen (20) zu verifizieren;
die erweiterte statische Client-Anwendungsbibliothek (30) die Aufgabe hat, die Erzeugung einer Anforderung von der Client-Anwendung (40) anzufordern, wenn die biometrischen Informationen (20) die Verifizierung bestehen;
die Client-Anwendung (40) die Aufgabe hat, die Anforderung an eine vertrauenswürdige Anwendung in einer vertrauenswürdigen Ausführungsumgebung zu übertragen, und die vertrauenswürdige Anwendung die Aufgabe hat, einen Schlüsselblock in der vertrauenswürdigen Zone (50) zu erzeugen und den Schlüsselblock an die erweiterte statische Client-Anwendungsbibliothek (30) zurückzugeben; und
die erweiterte statische Client-Anwendungsbibliothek (30) ferner die Aufgabe hat, den Schlüsselblock zu verschlüsseln, um einen verschlüsselten Schlüsselblock zu erhalten.

2. Sicherheitsverstärkungsarchitektur (100) nach Anspruch 1, wobei das Anwendungsprogramm (10) die biometrischen Informationen (20) und die erweiterte statische Client-Anwendungsbibliothek (30) miteinander verknüpft.

3. Sicherheitsverstärkungsarchitektur (100) nach Anspruch 1, wobei das Anwendungsprogramm (10) die erweiterte statische Client-Anwendungsbibliothek (30) zur Initialisierung aufruft.

4. Sicherheitsverstärkungsarchitektur (100) nach Anspruch 1, wobei die biometrischen Informationen (20) Fingerabdruckinformationen, Gesichtsinformationen und/oder Irisinformationen umfassen.

5. Sicherheitsverstärkungsarchitektur (100) nach Anspruch 4, wobei die Fingerabdruckinformationen einen oder mehrere fest codierte Werte ausgewählt aus einer Gruppe von Fingerabdruckversionsinformationen, einem Prüfwert einer zyklischen Redundanzprüfung, einem Hash-Wert und einem Schlüssel umfassen.

6. Sicherheitsverstärkungsarchitektur (100) nach Anspruch 1, wobei die erweiterte statische Client-Anwendungsbibliothek (30) ferner die Aufgabe hat, die Bereitstellung eines Verschlüsselungsdienstes zu verweigern, wenn die Verifizierung der biometrischen Informationen (20) erfolglos verläuft.

7. Sicherheitsverstärkungsarchitektur nach Anspruch 1, wobei:
die erweiterte statische Client-Anwendungsbibliothek (30) ferner die Aufgabe hat, den verschlüsselten Schlüsselblock zu entschlüsseln und den entschlüsselten Schlüsselblock und Datenklartext zu der vertrauenswürdigen Anwendung in der vertrauenswürdigen Ausführungsumgebung zu übertragen, wenn das Anwendungsprogramm (10) eine Datenklartext-Verschlüsselungsanforderung überträgt; und
die vertrauenswürdige Anwendung die Aufgabe hat, in der vertrauenswürdigen Zone (50) den entschlüsselten Schlüsselblock zu entschlüsseln und den Datenklartext zu verschlüsseln, um Datenchiffretext zu erhalten, und den Datenchiffretext an das Anwendungsprogramm (10) zurückzugeben.

8. Sicherheitsverstärkungsarchitektur nach Anspruch 1, wobei:
die erweiterte statische Client-Anwendungsbibliothek (30) ferner die Aufgabe hat, den verschlüsselten Schlüsselblock zu entschlüsseln und den entschlüsselten Schlüsselblock und Datenchiffretext zu der vertrauenswürdigen Anwendung in der vertrauenswürdigen Ausführungsumgebung zu übertragen, wenn das Anwendungsprogramm (10) eine Datenchiffretext-Entschlüsselungsanforderung überträgt; und
die vertrauenswürdige Anwendung in der vertrauenswürdigen Zone (50) den entschlüsselten Schlüsselblock entschlüsselt und den Datenchiffretext entschlüsselt, um Datenklartext zu erhalten, und den Datenklartext an das Anwendungsprogramm (10) zurückgibt.

9. Ver- und Entschlüsselungsverfahren für eine Sicherheitsverstärkungsarchitektur (100), anwendbar auf ein Internet-von-Fahrzeugen-Endgerät (200), **dadurch gekennzeichnet, dass**:
die Sicherheitsverstärkungsarchitektur (100) ein Anwendungsprogramm (10), biometrische Informationen (20), eine erweiterte statische Client-Anwendungsbibliothek (30), eine Client-Anwendung (40) und eine vertrauenswürdige Zone (50) umfasst, wobei das Ver- und Entschlüsselungsverfahren Folgendes beinhaltet:
Laden (S10) der biometrischen Informationen (20) durch das Anwendungsprogramm (10);
Verifizieren (S20) der biometrischen Informationen (20) durch die erweiterte statische Client-Anwendungsbibliothek (30) und, wenn die biometrischen Informationen (20) die Verifizierung bestehen, Anfordern der Erzeugung einer Anforderung von der Client-Anwendung (40) durch die erweiterte statische Client-Anwendungsbibliothek (30);
Übertragen (S30) der Anforderung zu einer vertrauenswürdigen Anwendung in einer vertrauenswürdigen Ausführungsumgebung durch die Client-Anwendung (40);
Erzeugen (S40) eines Schlüsselblocks in der vertrauenswürdigen Zone (50) und Zurückgeben des Schlüsselblocks an die erweiterte statische Client-Anwendungsbibliothek (30) durch die vertrauenswürdige Anwendung; und
Verschlüsseln (S50) des Schlüsselblocks durch die erweiterte statische Client-Anwendungsbibliothek (30), um einen verschlüsselten Schlüsselblock zu erhalten.

10. Ver- und Entschlüsselungsverfahren nach Anspruch 9, das Folgendes beinhaltet:
Entschlüsseln (S60) des verschlüsselten Schlüsselblocks und Übertragen des entschlüsselten Schlüsselblocks und Datenklartexts zu der vertrauenswürdigen Anwendung in der vertrauenswürdigen Ausführungsumgebung durch die erweiterte statische Client-Anwendungsbibliothek (30), wenn das Anwendungsprogramm (10) eine Datenklartext-Verschlüsselungsanforderung überträgt; und
Entschlüsseln (S70) des entschlüsselten Schlüsselblocks und Verschlüsseln des Datenklartexts, um Datenchiffretext in der vertrauenswürdigen Zone (50) zu erhalten, und Zurückgeben des Datenchiffretextes an das Anwendungsprogramm (10) durch die vertrauenswürdige Anwendung.

11. Ver- und Entschlüsselungsverfahren nach Anspruch 9, das Folgendes beinhaltet:
Entschlüsseln (S80) des verschlüsselten Schlüsselblocks und Übertragen des entschlüsselten Schlüsselblocks und Datenchiffretexts zu der vertrauenswürdigen Anwendung in der vertrauenswürdigen Ausführungsumgebung durch die erweiterte statische Client-Anwendungsbibliothek (30), wenn das Anwendungsprogramm (10) eine Datenchiffretext-Entschlüsselungsanforderung überträgt; und
Entschlüsseln (S90) des entschlüsselten Schlüsselblocks und Entschlüsseln des Datenchiffretextes, um Datenklartext in der vertrauenswürdigen Zone (50) zu erhalten, und Zurückgeben des Datenklartexts an das Anwendungsprogramm (10) durch die vertrauenswürdige Anwendung.

12. Internet-von-Fahrzeugen-Endgerät (200), das die
Sicherheitsverstärkungsarchitektur (100) nach einem der Ansprüche 1 bis 8 verwendet.

13. Fahrzeug, das das Internet-von-Fahrzeugen-Endgerät (200) nach Anspruch 12 umfasst.

14. Fahrzeug, das Folgendes umfasst:
einen oder mehrere Prozessoren, ein Speichergerät; und
ein oder mehrere Programme, wobei die ein oder mehreren Programme in dem Speichergerät gespeichert sind und von den ein oder mehreren Prozessoren ausgeführt werden können und die Programme Befehle zur Durchführung des Ver- und Entschlüsselungsverfahrens nach einem der Ansprüche 9 bis 11 umfassen.

15. Nichtflüchtiges, computerlesbares Speichermedium, das computerausführbare Befehle enthält, die bei Ausführung durch einen Prozessor bewirken, dass der Prozessor das Ver- und Entschlüsselungsverfahren nach einem der Ansprüche 9 bis 11 durchführt.

## Revendications

1. Architecture de renforcement de la sécurité (100), applicable à un terminal internet de véhicules (200), **caractérisée en ce que** :
l'architecture de renforcement de la sécurité (100) comprend un programme d'application (10), des informations biométriques (20), une bibliothèque statique d'application client améliorée (30), une application client (40), et une zone de confiance (50) ;
le programme d'application (10) est utilisable pour charger les informations biométriques (20) ;
la bibliothèque statique d'application client améliorée (30) est utilisable pour vérifier les informations biométriques (20) ;
la bibliothèque statique d'application client améliorée (30) est utilisable pour demander une génération d'une demande de la part de l'application client (40) si la vérification des informations biométriques (20) est réussie ;
l'application client (40) est utilisable pour transmettre la demande à une application de confiance dans un environnement d'exécution de confiance, et l'application de confiance est utilisable pour générer un bloc de clés dans la zone de confiance (50) et renvoyer le bloc de clés vers la bibliothèque statique d'application client améliorée (30) ; et
la bibliothèque statique d'application client améliorée (30) est en outre utilisable pour chiffrer le bloc de clés pour obtenir un bloc de clés chiffré.

2. Architecture de renforcement de la sécurité (100) selon la revendication 1, dans laquelle le programme d'application (10) lie les informations biométriques (20) et la bibliothèque statique d'application client améliorée (30).

3. Architecture de renforcement de la sécurité (100) selon la revendication 1, dans laquelle le programme d'application (10) appelle la bibliothèque statique d'application client améliorée (30) pour une initialisation.

4. Architecture de renforcement de la sécurité (100) selon la revendication 1, dans laquelle les informations biométriques (20) comprennent des informations relatives aux empreintes digitales, des informations relatives au visage, et/ou des informations relatives aux iris.

5. Architecture de renforcement de la sécurité (100) selon la revendication 4, dans laquelle les informations relatives aux empreintes digitales incluent une ou plusieurs valeurs codées en dur choisies parmi un groupe composé d'informations de version d'empreintes digitales, d'une valeur de contrôle d'un contrôle de redondance cyclique, d'une valeur de hachage, et d'une clé.

6. Architecture de renforcement de la sécurité (100) selon la revendication 1, dans laquelle la bibliothèque statique d'application client améliorée (30) est en outre utilisable pour refuser de fournir un service de chiffrement si la vérification des informations biométriques (20) échoue.

7. Architecture de renforcement de la sécurité selon la revendication 1, dans laquelle :
la bibliothèque statique d'application client améliorée (30) est en outre utilisable pour, lorsque le programme d'application (10) transmet une demande de chiffrement en texte clair de données, déchiffrer le bloc de clés chiffré et transmettre le bloc de clés déchiffré et un texte clair de données à l'application de confiance dans l'environnement d'exécution de confiance ; et
l'application de confiance est utilisable pour, dans la zone de confiance (50), déchiffrer le bloc de clés déchiffré et chiffrer le texte clair de données pour obtenir un texte chiffré de données, et renvoyer le texte chiffré de données au programme d'application (10).

8. Architecture de renforcement de la sécurité selon la revendication 1, dans laquelle :
la bibliothèque statique d'application client améliorée (30) est en outre utilisable pour, lorsque le programme d'application (10) transmet une demande de déchiffrement de texte chiffré de données, déchiffrer le bloc de clés chiffré et transmettre le bloc de clés déchiffré et un texte chiffré de données à l'application de confiance dans l'environnement d'exécution de confiance ; et
l'application de confiance, dans la zone de confiance (50), déchiffre le bloc de clés déchiffré et déchiffre le texte chiffré de données pour obtenir un texte clair de données, et renvoie le texte clair de données au programme d'application (10).

9. Procédé de chiffrement et de déchiffrement destiné à une architecture de renforcement de la sécurité (100), applicable à un terminal internet de véhicules (200), **caractérisé en ce que** :
l'architecture de renforcement de la sécurité (100) comprend un programme d'application (10), des informations biométriques (20), une bibliothèque statique d'application client améliorée (30), une application client (40), et une zone de confiance (50),
dans lequel le procédé de chiffrement et de déchiffrement comprend :
un chargement (S10) des informations biométriques (20) par le programme d'application (10) ;
une vérification (S20) des informations biométriques (20) par la bibliothèque statique d'application client améliorée (30) et, si la vérification des informations biométriques (20) est réussie, une demande d'une génération d'une demande de la part de l'application client (40) par la bibliothèque statique d'application client améliorée (30) ;
une transmission (S30) de la demande à une application de confiance dans un environnement d'exécution de confiance par l'application client (40) ;
une génération (S40) d'un bloc de clés dans la zone de confiance (50) et un renvoi du bloc de clés à la bibliothèque statique d'application client améliorée (30) par l'application de confiance ; et
un chiffrement (S50) du bloc de clés par la bibliothèque statique d'application client améliorée (30) pour obtenir un bloc de clés chiffré.

10. Procédé de chiffrement et de déchiffrement selon la revendication 9, comprenant :
lorsque le programme d'application (10) transmet une demande de chiffrement en texte clair de données, un déchiffrement (S60) du bloc de clés chiffré et une transmission du bloc de clés déchiffré et d'un texte clair de données à l'application de confiance dans l'environnement d'exécution de confiance par la bibliothèque statique d'application client améliorée (30) ; et
un déchiffrement (S70) du bloc de clés déchiffré et un chiffrement du texte clair de données pour obtenir un texte chiffré de données dans la zone de confiance (50), et un renvoi du texte chiffré de données au programme d'application (10) par l'application de confiance.

11. Procédé de chiffrement et de déchiffrement selon la revendication 9, comprenant :
lorsque le programme d'application (10) transmet une demande de déchiffrement de texte chiffré de données, un déchiffrement (S80) du bloc de clés chiffré et une transmission du bloc de clés déchiffré et d'un texte chiffré de données à l'application de confiance dans l'environnement d'exécution de confiance par la bibliothèque statique d'application client améliorée (30) ; et
un déchiffrement (S90) du bloc de clés déchiffré et un déchiffrement du texte chiffré de données pour obtenir un texte clair de données dans la zone de confiance (50), et un renvoi du texte clair de données au programme d'application (10) par l'application de confiance.

12. Terminal internet de véhicules (200) employant l'architecture de renforcement de la sécurité (100) selon l'une quelconque des revendications 1 à 8.

13. Véhicule comprenant le terminal internet de véhicules (200) selon la revendication 12.

14. Véhicule, comprenant :
un ou plusieurs processeurs, un dispositif de mémoire ; et
un ou plusieurs programmes, dans lequel les un ou plusieurs programmes sont stockés dans le dispositif de mémoire et sont exécutables par un ou plusieurs processeurs, et les programmes comprennent des instructions pour une réalisation du procédé de chiffrement et de déchiffrement selon l'une des revendications 9 à 11.

15. Support de stockage lisible par ordinateur non transitoire comprenant des instructions exécutables par ordinateur qui, lorsqu'elles sont exécutées par un processeur, amènent le processeur à effectuer le procédé de chiffrement et de déchiffrement selon l'une des revendications 9 à 11.
